# EUROPEAN PATENT SPECIFICATION

(11) **EP 2 362 663 B1**
(45) Date of publication and mention of the grant of the patent: **13.03.2013**
(21) Application number: 10173170.1
(22) Date of filing: 18.08.2010
(51) Int. Cl.: H04N 13/04

(54) **Display device and method of driving the same**
Anzeigevorrichtung und Ansteuerverfahren dafür
Dispositif d'affichage et son procédé de commande

(30) Priority: 26.02.2010 KR 20100018039
(43) Date of publication of application: 31.08.2011
(73) Proprietor: Samsung Electronics Co., Ltd., Suwon-si, Gyeonggi-do, 443-742 (KR)
(72) Inventor: Park, Jae-sung, Seoul (KR); Ha, Tae-hyeun, Gyeonggi-do (KR); Park, Jung-jin, Gyeonggi-do (KR); Choi, Nak-won, Incheon (KR)
(74) Representative: Hewett, Jonathan Michael Richard

(56) References cited:
- US-A- 6 057 811
- US-A1- 2009 315 977
- US-B1- 6 791 599

## Description

The present invention relates to a display device and a method of driving the same, and more particularly, to a display device which is capable of outputting a synchronizing signal corresponding to 3D glasses and a method of driving the same.

A three-dimensional (3D) image displayed by a display device such as a TV has a stereoscopic effect by using a binocular parallax which is a major factor to allow three-dimensional recognition at a short distance.

The 3D image may be viewed with 3D shutter glasses. When the display device transmits a synchronizing signal to the 3D glasses, the 3D glasses open and close the left shutter and right shutter, respectively, using the synchronizing signal at the time when left and right images are displayed.

United States Patent US 6,057,811 shows shutter glasses where the user can set the shutter glass intervals.

United States Patent Application US 2009/0315977 A1 discloses that in a stereoscopic display system with shutter glasses, the transmission of synchronization signals can be done via infrared, other light, radio or energy frequencies as well as wired.

United States Patent US 6,791,599 B1 shows shutter glasses with a transmission channel built out of a plurality of emitters.

Meanwhile, the 3D glasses may operate with a synchronizing signal with a specific frequency or specific wavelength. Thus, if a mode of transmitting a synchronizing signal is changed, e.g., the display device changes a frequency of a synchronizing signal, a user may not use the 3D glasses since the display device is not compatible with the 3D glasses.

Accordingly, an aspect of the present invention is to provide a display device which outputs a synchronizing signal corresponding to an operation mode of 3D glasses so that a user may use the 3D glasses even if a transmitting mode of a synchronizing signal is changed and a method of driving the same.

The foregoing and/or other aspects may be achieved by providing a display device according to claims 1-9.

According to another aspect of the present invention, there is provided a method of driving a display device according to claims 10-13.

The above and/or other aspects will become apparent and more readily appreciated from the following description of the exemplary embodiments, taken in conjunction with the accompanying drawings, in which:
FIG. 1 is a block diagram illustrating a configuration of a display device according to an exemplary embodiment.
FIG. 2 is a view illustrating information about an operation mode of the 3D glasses displayed in the display device according to an exemplary embodiment.
FIG. 3 is a time chart illustrating a change of a frequency of a synchronizing signal output from the display device according to an exemplary embodiment.
FIG. 4 is a diagram illustrating a change of a wavelength of a synchronizing signal output from the display device according to an exemplary embodiment.
FIG. 5 is a flow chart illustrating an operation of the display device according to an exemplary embodiment.

Below, exemplary embodiments will be described in detail with reference to accompanying drawings so as to be easily realized by a person having ordinary skill in the art. The present invention may be embodied in various forms without being limited to the exemplary embodiments set forth herein. Descriptions of well-known parts are omitted for clarity, and like reference numerals refer to like elements throughout.

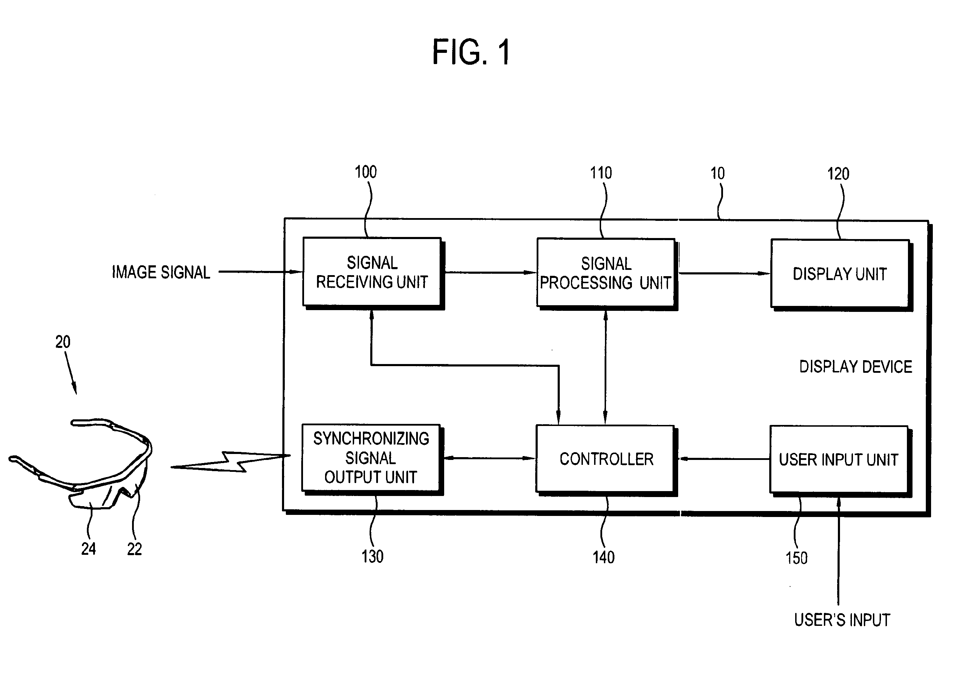

FIG. 1 is a block diagram illustrating a configuration of a display device according to an exemplary embodiment.

Referring to FIG. 1, the display device 10 according to an exemplary embodiment includes a signal receiving unit 100, a signal processing unit 110, a display unit 120, a synchronizing signal output unit 130, a controller 140, and a user input unit 150.

The signal receiving unit 100 receives an image signal including left and right images. The image signal received by the signal receiving unit 100 further includes broadcasting signals such as DTV signals, cable broadcasting signals, etc. In this case, the signal receiving unit 100 may receive a broadcasting signal of a channel selected by a user via tuning according to control by the controller 140. Moreover, the image signal received by the signal receiving unit 100 includes signals output from a video device such as a DVD, BD, etc. In addition, although not shown, the signal receiving unit 100 may receive an audio signal for audio output, a data signal for output of data information, etc. In an exemplary embodiment, an image signal, an audio signal, and a data signal may be received together through a single broadcasting signal.

The signal processing unit 110 processes a signal so that image signals including left and right images may be displayed into 3D images on the display unit 120. Signal processing conducted by the signal processing unit 110 includes decoding, image enhancing, scaling, etc. Furthermore, the signal processing unit 110 may perform demultiplexing which is sorting broadcasting signals received through the signal receiving unit 100 into image, audio, and data signals, decoding audio and data signals, etc. In this case, the display device 10 may further include an audio output unit (not shown) which outputs a sound based on an audio signal processed by the signal processing unit 110, e.g., a speaker.

The display unit 120 displays an image on the basis of an image signal processed by the signal processing unit 110. The display unit 120 may use, for example, an LCD type to display an image. In this case, although not shown, the display unit 120 may include an LCD panel, a panel driver, a backlight, etc. The backlight may include a light source, e.g., an LED. The display unit 120 may display data information included in a data signal processed by the signal processing unit 110.

The synchronizing signal output unit 130 outputs a synchronizing signal to open and close a left shutter 22 and a right shutter 24 of 3D glasses 20 corresponding to a left image and a right image, respectively. The synchronizing signal output unit 130 outputs a synchronizing signal according to control by the controller 140 and may include an emitter which outputs a synchronizing signal as an infrared signal. The emitter may include a light emitting diode, LED, which generates light with a specific wavelength.

Meanwhile, the synchronizing signal output unit 130 may include a plurality of emitters. Each emitter outputs a specific synchronizing signal, and synchronizing signals emitted from the emitters have different frequencies or wavelengths. Further, the synchronizing signal output unit 130 may include a single emitter which selectively outputs a plurality of synchronizing signals with different frequencies or wavelengths.

The user input unit 150 receives user's input related to an operation mode of the 3D glasses 20. The 3D glasses 20 may have a different operation mode. Thus, when a user selects an operation mode of the 3D glasses 20, the display device 10 outputs a synchronizing signal corresponding to the selected 3D glasses 20. The 3D glasses 20 having a different operation mode means a frequency or a wavelength of a signal to operate the 3D glasses 20 is different depending on the 3D glasses 20.

The controller 140 controls other components of the display device 10, such as the signal processing unit 110. Further, when a user selects the operation mode of the 3D glasses 20, the controller 140 controls the synchronizing signal output unit 130 to output a synchronizing signal corresponding to the operation mode of the 3D glasses 20. Moreover, the controller 140 may display information about the operation mode of the 3D glasses 20 so that the user may easily select the operation mode of the 3D glasses 20. The information about the operation mode of the 3D glasses 20 may include a model name of the 3D glasses 20, a frequency and a wavelength of an operating signal, etc. If a plurality of 3D glasses 20 are provided, the controller 140 displays information about an operation mode of each 3D glasses 20.

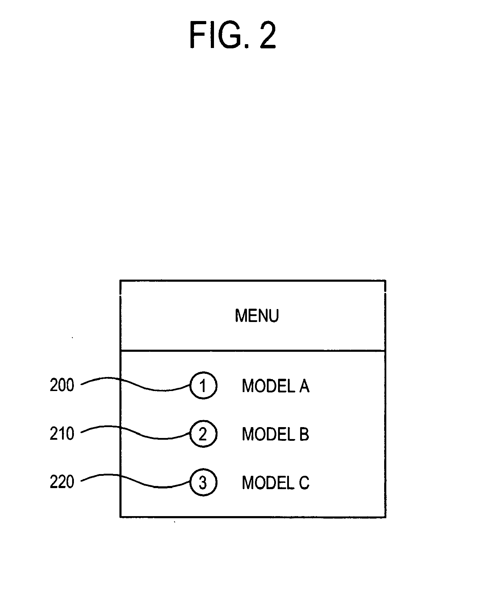

FIG. 2 is a view illustrating information about an operation mode of the 3D glasses 20 displayed in the display device 10 according to an exemplary embodiment.

For user's convenience, FIG. 2 shows displaying a model name of the 3D glasses 20 used by a user. When the user selects specific 3D glasses 20 from model names of the 3D glasses 20, i.e., MODEL A 200, MODEL B 210, and MODEL C 220, the controller 140 outputs a synchronizing signal corresponding to the selected 3D glasses 20. In addition to the model names of the 3D glasses 20, the controller 140 may display a frequency or wavelength of an operating signal of the 3D glasses 20. Also, if no model name is displayed, the controller 140 may display a frequency or wavelength of an operating signal of the 3D glasses 20 itself so that the frequency or wavelength is selectable, or it may allow a user to directly input a frequency or wavelength of an operating signal.

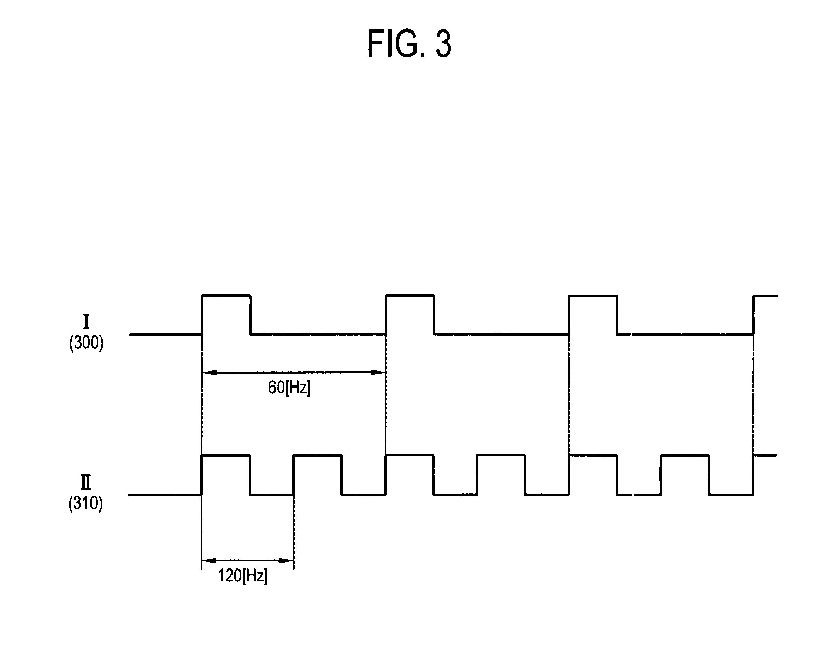

FIG. 3 is a timing chart illustrating a change of a frequency of a synchronizing signal output from the display device 10 according to an exemplary embodiment.

Observing an operation process of the display device 10 and the 3D glasses 20, the display device 10 displays left and right images quickly and in an alternating manner and opens and closes the shutter 3D glasses 20 to synchronize with the left and right images, thereby realizing a 3D image. That is, when the left images of the display device 10 are displayed on a screen, the left shutter 22 of the 3D glasses 20 is opened and the right shutter 24 is closed. When the right images of the display device 10 are displayed, the right shutter 24 of the 3D glasses 20 is opened and the left shutter 22 is closed.

In FIG. 3, signal I 300 shows that the display device 10 and the 3D glasses 20 operate at 60 [Hz], and signal II 310 shows that the display device 10 and the 3D glasses 20 operate at 120 [Hz]. When a left or a right image is displayed by the display device 10, a synchronizing signal is generated to be in a high state/. In this high state, the left shutter 22 or the right shutter 24 of the 3D glasses 20 is opened/closed.

In a case the display device 10 operates at a driving frequency of 60 [Hz] and changes to 120 [Hz], if the synchronizing signal output unit 130 output a synchronizing signal via changing a frequency i.e., 120 [Hz], the 3D glasses 20 operating at 120 [Hz] can provide a clear image to a user, while for the 3D glasses 20 operating at 60 [Hz] it is difficult to provide a clear image. Thus, the controller 140 controls the synchronizing signal output unit 130 to output a synchronizing signal corresponding to a driving frequency of the 3D glasses 20. To this end, the synchronizing signal output unit 130 may include a plurality of emitters outputting a 60 [Hz] synchronizing signal and a 120 [Hz] synchronizing signal, respectively, and thus if the user selects an operation mode of 3D glasses 20, the controller 140 controls the synchronizing signal output unit 130 to output a synchronizing signal corresponding to the selected 3D glasses 20. Alternatively, a single emitter may output a synchronizing signal corresponding to the selected 3D glasses 20 through a frequency conversion or the like.

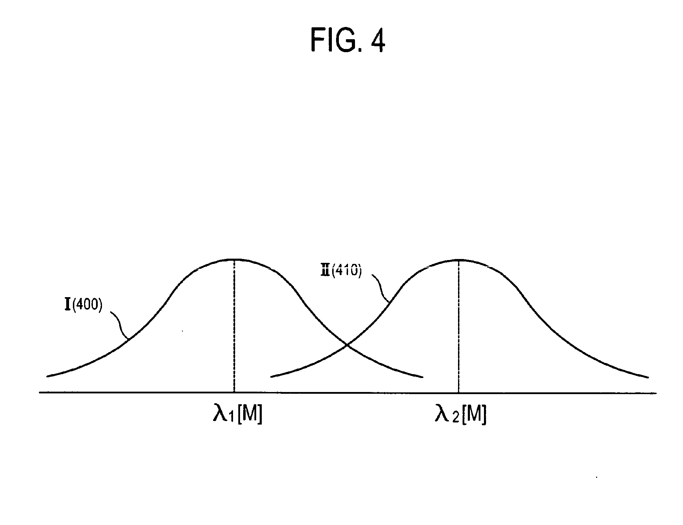

FIG. 4 is a chart illustrating a change of a wavelength of a synchronizing signal output from the display device 10 according to an exemplary embodiment.

Signal I 400 shows a synchronizing signal that has a centroid wavelength of λ1 [M], and signal II 410 shows a synchronizing signal that has a centroid wavelength of λ2 [M]. LEDs included in the synchronizing signal output unit 130 emit light with a centroid wavelength in a specific range. Thus, the synchronizing signal output unit 130 may change a wavelength of a synchronizing signal output.

Meanwhile, the 3D glasses 20 can be operated when a centroid wavelength of a synchronizing signal is in a specific range, which is different on 3D glasses 20. Therefore, when a centroid wavelength of light output from the synchronizing signal output unit 130 is changed and in this case the 3D glasses 20 which the user uses is not operated at the centroid wavelength of the output light, a clear image may be difficult to provide. To prevent this phenomenon, the controller 140 controls the synchronizing signal output unit 130 to output a synchronizing signal corresponding to an operation wavelength at which the 3D glasses 20 operates. For this, the synchronizing signal output unit 130 may include a plurality of emitters outputting a λ1 [M] synchronizing signal and a λ2 [M] synchronizing signal, respectively, and thus if the user selects an operation mode of 3D glasses 20, the controller 140 controls the synchronizing signal output unit 130 to output a synchronizing signal corresponding to the selected 3D glasses 20. Alternatively, a single emitter may output a synchronizing signal corresponding to the selected 3D glasses 20 through a wavelength conversion or the like.

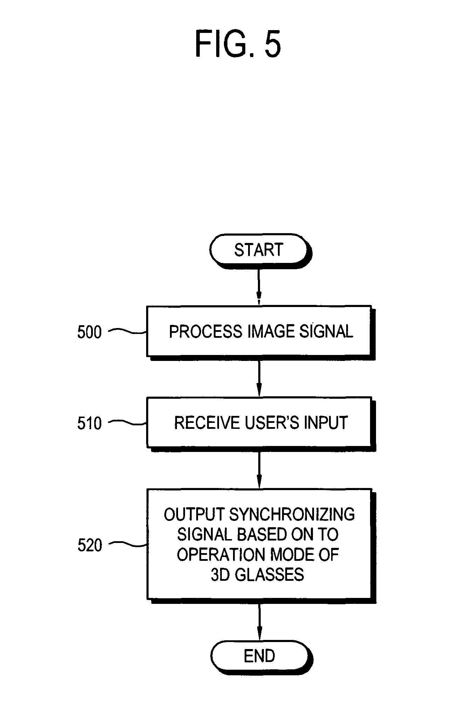

FIG. 5 is a flow chart illustrating an operation of the display device 10 according to an exemplary embodiment.

When an image signal including left and right images is received by the signal receiving unit 100, the signal processing unit 110 processes the received image signal to be displayed (500). Further, the controller 140 displays information about operation modes of 3D glasses 20 and receives information about an operation mode of 3D glasses 20 selected by a user (510). Then, the controller 140 outputs a synchronizing signal corresponding to the operation mode of the 3D glasses 20 according to the input by the user in order to open/close the left shutter 22 and the right shutter 24 of the 3D glasses 20 corresponding to the left and right images (520).

As described above, in the exemplary embodiment, even if a display device changes a mode of transmitting a synchronizing signal, a display device is capable of outputting a synchronizing signal corresponding to an operation mode of 3D glasses, and thus a user can use the old 3D glasses.

Further, a user can view the 3D images displayed in an old display device even when 3D glasses are replaced.

Although a few exemplary embodiments have been shown and described, it will be appreciated by those skilled in the art that changes may be made in these exemplary embodiments without departing from the principles of the invention, the scope of which is defined in the appended claims.

## Claims

1. A stereoscopic display device (10) using shutter glasses (20) including a left shutter (22) and a right shutter (24), the display device comprising:
a signal receiving unit (100) which receives an image signal including a left image and a right image;
a signal processing unit (110) which processes the image signal received by the signal receiving unit;
a display unit (120) which displays a stereoscopic image based on the image signal processed by the signal processing unit;
a synchronizing signal output unit (130) which outputs a light signal for synchronizing the shutter glasses with the display to open and close the left shutter and the right shutter of the shutter glasses corresponding to the left image and the right image, respectively; and
a controller (140) which receives a selecting input for selecting a frequency and/or wavelength and controls the synchronizing signal output unit to output the light signal having a frequency and/or wavelength corresponding to the selecting input.

2. The display device according to claim 1 wherein the controller (140) is arranged to receive a selecting input for selecting a frequency and/or wavelength from a plurality of frequencies and/or wavelengths.

3. The display device according to claim 1 or claim 2, comprising a user input unit (150) arranged to receive a user input regarding a frequency and/or wavelength.

4. The display device according to claim 3, wherein the controller (140) displays information about the frequency and/or wavelength of the synchronization signal for shutter glasses (20) for selection by a user.

5. The display device according to claim 4, wherein the information further comprises a model name of the shutter glasses.

6. The display device according to claim 1 or claim 2, wherein the selecting input further comprises a model name of the shutter glasses.

7. The display device according to any one of claims 1 to 6, wherein the synchronizing signal output unit (130) comprises a plurality of light emitters each of which outputs a different respective synchronizing signal.

8. The display device according to any one of claims 1 to 6, wherein the synchronizing signal output unit (130) comprises a light emitter which selectively outputs one of a plurality of different synchronizing signals.

9. The display device according to claim 7, wherein the synchronizing signals are different in at least one of frequency and wavelength.

10. A method of driving a stereoscopic display device (10) using shutter glasses (20) including a left shutter (22) and a right shutter (24), the method comprising:
processing an image signal input including a left image and a right image;
receiving user input regarding a frequency and/or wavelength of a light signal for synchronizing the display and the shutter glasses; and
outputting the light signal corresponding to the frequency and/or wavelength input by the user in order to open and close the left shutter and the right shutter of the three-dimensional glasses corresponding to the left image and the right image, respectively.

11. The method according to claim 10, comprising displaying information about the frequency and/or wavelength of the synchronization signal for selection by a user.

12. The method according to claim 10 or claim 11, wherein the outputting comprises outputting the light signal from a plurality of light emitters, each of which outputs a different respective synchronizing signals.

13. The method according to claim 10 or claim 11, wherein the outputting comprises outputting the light signal from a light emitter which selectively outputs one of a plurality of different synchronizing signals.

## Patentansprüche

1. Stereoskopische Anzeigevorrichtung (10) unter Verwendung einer Shutterbrille (20), die einen linken Shutter (22) und einen rechten Shutter (24) beinhaltet, wobei die Anzeigevorrichtung Folgendes umfasst:
eine Signalempfangseinheit (100), die ein Bildsignal empfängt, das ein linkes Bild und ein rechtes Bild beinhaltet;
eine Signalverarbeitungseinheit (110), die das von der Signalempfangseinheit empfangene Bildsignal verarbeitet;
eine Anzeigeeinheit (120), die ein stereoskopisches Bild auf Basis des von der Signalverarbeitungseinheit verarbeiteten Bildsignals anzeigt;
eine Synchronisierungssignalausgabeeinheit (130), die ein Lichtsignal zum Synchronisieren der Shutterbrille mit der Anzeige ausgibt, um den linken Shutter und den rechten Shutter der Shutterbrille entsprechend dem linken Bild bzw. dem rechten Bild zu öffnen und zu schließen; und
eine Steuerung (140), die eine Auswahleingabe zum Auswählen einer Frequenz und/oder Wellenlänge empfängt und die Synchronisierungssignalausgabeeinheit steuert, um das Lichtsignal mit einer Frequenz und/oder Wellenlänge entsprechend der Auswahleingabe auszugeben.

2. Anzeigevorrichtung nach Anspruch 1, wobei die Steuerung (140) dazu eingerichtet ist, eine Auswahleingabe zum Auswählen einer Frequenz und/oder Wellenlänge aus mehreren Frequenzen und/oder Wellenlängen zu empfangen.

3. Anzeigevorrichtung nach Anspruch 1 oder 2, die eine Benutzereingabeeinheit (150) umfasst, die dazu eingerichtet ist, eine Benutzereingabe bezüglich einer Frequenz und/oder Wellenlänge zu empfangen.

4. Anzeigevorrichtung nach Anspruch 3, wobei die Steuerung (140) Informationen zu der Frequenz und/oder Wellenlänge des Synchronisierungssignals für eine Shutterbrille (20) zur Auswahl durch einen Benutzer anzeigt.

5. Anzeigevorrichtung nach Anspruch 4, wobei die Informationen weiterhin einen Modellnamen der Shutterbrille umfassen.

6. Anzeigevorrichtung nach Anspruch 1 oder 2, wobei die Auswahleingabe weiterhin einen Modellnamen der Shutterbrille umfasst.

7. Anzeigevorrichtung nach einem der Ansprüche 1 bis 6, wobei die Synchronisierungssignalausgabeeinheit (130) mehrere Lichtsender umfasst, von denen jeder ein jeweils unterschiedliches Synchronisierungssignal ausgibt.

8. Anzeigevorrichtung nach einem der Ansprüche 1 bis 6, wobei die Synchronisierungssignalausgabeeinheit (130) einen Lichtsender umfasst, der selektiv eines von mehreren unterschiedlichen Synchronisierungssignalen ausgibt.

9. Anzeigevorrichtung nach Anspruch 7, wobei die Synchronisierungssignale in Bezug auf mindestens eine von Frequenz und Wellenlänge unterschiedlich sind.

10. Verfahren zur Ansteuerung einer stereoskopischen Anzeigevorrichtung (10) unter Verwendung einer Shutterbrille (20), die einen linken Shutter (22) und einen rechten Shutter (24) beinhaltet, wobei das Verfahren Folgendes umfasst:
Verarbeiten einer Bildsignaleingabe, die ein linkes Bild und ein rechtes Bild beinhaltet;
Empfangen einer Benutzereingabe bezüglich einer Frequenz und/oder Wellenlänge eines Lichtsignals zum Synchronisieren der Anzeige und der Shutterbrille und
Ausgeben des Lichtsignals entsprechend der Frequenz- und/oder Wellenlängeneingabe durch den Benutzer, um den linken Shutter und den rechten Shutter der 3D-Brille entsprechend dem linken Bild bzw. dem rechten Bild zu öffnen und zu schließen.

11. Verfahren nach Anspruch 10, das das Anzeigen von Informationen zu der Frequenz und/oder Wellenlänge des Synchronisierungssignals zur Auswahl durch einen Benutzer umfasst.

12. Verfahren nach Anspruch 10 oder 11, wobei das Ausgeben das Ausgeben des Lichtsignals von mehreren Lichtsendern umfasst, von denen jeder ein jeweils unterschiedliches Synchronisierungssignal ausgibt.

13. Verfahren nach Anspruch 10 oder 11, wobei das Ausgeben das Ausgeben des Lichtsignals von einem Lichtsender umfasst, der selektiv eines von mehreren unterschiedlichen Synchronisierungssignalen ausgibt.

## Revendications

1. Dispositif d'affichage stéréoscopique (10) utilisant des verres obturateurs (20) comportant un obturateur gauche (22) et un obturateur droit (24), le dispositif d'affichage comprenant :
une unité de réception de signal (100) qui reçoit un signal d'image comportant une image gauche et une image droite ;
une unité de traitement de signal (110) qui traite le signal d'image reçu par l'unité de réception de signal ;
une unité d'affichage (120) qui affiche une image stéréoscopique en fonction du signal d'image traité par l'unité de traitement de signal ;
une unité de sortie de signal de synchronisation (130) qui produit en sortie un signal de lumière pour synchroniser les verres obturateurs avec l'affichage pour ouvrir et fermer l'obturateur gauche et l'obturateur droit des verres obturateurs correspondant à l'image gauche et à l'image droite, respectivement ; et
une unité de commande (140) qui reçoit une entrée de sélection pour sélectionner une fréquence et/ou une longueur d'onde et commande l'unité de sortie de signal de synchronisation afin de produire en sortie le signal de lumière ayant une fréquence et/ou une longueur d'onde correspondant à l'entrée de sélection.

2. Dispositif d'affichage selon la revendication 1, dans lequel l'unité de commande (140) est agencée pour recevoir une entrée de sélection pour sélectionner une fréquence et/ou une longueur d'onde parmi une pluralité de fréquences et/ou de longueurs d'onde.

3. Dispositif d'affichage selon la revendication 1 ou la revendication 2, comprenant une unité d'entrée utilisateur (150) agencée pour recevoir une entrée utilisateur relative à une fréquence et/ou une longueur d'onde.

4. Dispositif d'affichage selon la revendication 3, dans lequel l'unité de commande (140) affiche des informations relatives à la fréquence et/ou la longueur d'onde du signal de synchronisation des verres obturateurs (20) en vue d'une sélection par l'utilisateur.

5. Dispositif d'affichage selon la revendication 4, dans lequel les informations comprennent en outre un nom de modèle des verres obturateurs.

6. Dispositif d'affichage selon la revendication 1 ou la revendication 2, dans lequel l'entrée de sélection comprend en outre un nom de modèle des verres obturateurs.

7. Dispositif d'affichage selon l'une quelconque des revendications 1 à 6, dans lequel l'unité de sortie de signal de synchronisation (130) comprend une pluralité d'émetteurs de lumière qui produisent chacun en sortie un signal de synchronisation respectif différent.

8. Dispositif d'affichage selon l'une quelconque des revendications 1 à 6, dans lequel l'unité de sortie de signal de synchronisation (130) comprend un émetteur de lumière qui produit sélectivement en sortie l'un d'une pluralité de signaux de synchronisation différents.

9. Dispositif d'affichage selon la revendication 7, dans lequel les signaux de synchronisation sont différents en au moins l'une d'une fréquence et d'une longueur d'onde.

10. Procédé de commande d'un dispositif d'affichage stéréoscopique (10) utilisant des verres obturateurs (20) comportant un obturateur gauche (22) et un obturateur droit (24), le procédé comprenant :
le traitement d'une entrée de signal d'image comportant une image gauche et une image droite ;
la réception d'une entrée utilisateur relative à une fréquence et/ou une longueur d'onde d'un signal de lumière pour la synchronisation de l'affichage et des verres obturateurs ; et
la production en sortie du signal de lumière correspondant à la fréquence et/ou la longueur d'onde entrée par l'utilisateur afin d'ouvrir et de fermer l'obturateur gauche et l'obturateur droit des verres tridimensionnels correspondant à l'image gauche et à l'image droite, respectivement.

11. Procédé selon la revendication 10, comprenant l'affichage d'informations relatives à la fréquence et/ou la longueur d'onde du signal de synchronisation en vue d'une sélection par l'utilisateur.

12. Procédé selon la revendication 10 ou la revendication 11, dans lequel la production en sortie comprend la production en sortie du signal de lumière depuis une pluralité d'émetteurs de lumière, lesquels produisent chacun en sortie un signal de synchronisation respectif différent.

13. Procédé selon la revendication 10 ou la revendication 11, dans lequel la production en sortie comprend la production en sortie du signal de lumière depuis un émetteur de lumière qui produit sélectivement en sortie l'un d'une pluralité de signaux de synchronisation différents.
